# EUROPÄISCHE PATENTSCHRIFT

(11) **EP 4 479 629 B1**
(45) Veröffentlichungstag und Bekanntmachung des Hinweises auf die Patenterteilung: **11.11.2026**
(21) Anmeldenummer: 23704323.7
(22) Anmeldetag: 08.02.2023
(51) Int. Cl.: E21D 20/02, E21D 21/00, G01N 21/35, F16B 13/00

(54) **VORRICHTUNG UND VERFAHREN ZUR ANORDNUNG UND FIXIERUNG EINES ANKERS IN EINEM BOHRLOCH**
APPARATUS AND METHOD FOR ARRANGING AND FIXING AN ANCHOR IN A DRILLED HOLE
APPAREIL ET PROCÉDÉ POUR AGENCER ET FIXER UN DISPOSITIF D'ANCRAGE DANS UN TROU FORÉ

(30) Priorität: 15.02.2022 DE 102022103494
(43) Veröffentlichungstag der Anmeldung: 25.12.2024
(73) Patentinhaber: Rheinisch-Westfälische Technische Hochschule (RWTH) Aachen, 52062 Aachen (DE)
(72) Erfinder: STOROSCHEWICH, Violetta, 52146 Würselen (DE); CLAUSEN, Elisabeth, 52066 Aachen (DE)
(74) Vertreter: karo IP
(86) Internationale Anmeldenummer: PCT/EP2023/053084
(87) Internationale Veröffentlichungsnummer: WO 2023/156269

(56) Entgegenhaltungen:
- CN-A- 112 983 554
- CN-B- 106 837 419
- CN-U- 206 636 603
- KR-B1- 102 020 054
- US-A- 4 298 510
- RWTH: "AMT Research Report 2019/2020", 31 December 2020 (2020-12-31), pages 1 - 60, XP093034926, Retrieved from the Internet <URL:https://www.amt.rwth-aachen.de/en/home.html> [retrieved on 20230327]
- TOBIAS WENDEL RALPH BALTES ELISABETH CLAUSEN: "Sustainable Intelligent Mining Systems (SIMS), one Step Closer to the Mine of the Future", 226 MINING REPORT GLÜCKAUF, 31 December 2020 (2020-12-31), pages 1 - 8, XP093035040, Retrieved from the Internet <URL:https://mining-report.de/english/sustainable-intelligent-mining-systems-sims-one-step-closer-to-the-mine-of-the-future/> [retrieved on 20230327]
- VIOLETTA STOROSCHEWICH ET AL: "Einsatzpotential von bildgebender Infrarotthermographie in der Schüttgutfördertechnik", WORLD OF MINING, SURFACE & UNDERGROUND : INTERNATIONALE FACHZEITSCHRIFT FÜR DEN BERGBAU [URFACE MINING - BRAUNKOHLE & OTHER MINERALS.], vol. 71, no. 4, 1 September 2019 (2019-09-01), DE, pages 224 - 229, XP093034900, ISSN: 1613-2408

## Beschreibung

Die Erfindung betrifft eine Vorrichtung und ein Verfahren zur Anordnung und Fixierung eines Ankers in einem Bohrloch.

Hier angesprochene Anker werden auch als Gebirgs- und/oder Felsanker bezeichnet und insbesondere im Bergbau und/oder im Tiefbau zur Abstützung von Erdreich und/oder Felsformationen, zur Sicherung eines Steilufers und/oder zur Sicherung eines Bergwerks, z. B. im Bereich einer Firste und/oder einer Sohle, eingesetzt.

Ein Anker wird insbesondere durch ein Bindemittel in einem Bohrloch des Erdreichs bzw. Felsens fixiert. Das Bindemittel umfasst insbesondere mehrere Komponenten, die vor der Einbringung in das Bohrloch miteinander vermischt werden und dann nach Zugabe in dem Bohrloch unter einer chemischen, insbesondere exotherm verlaufenden, Reaktion aushärten.

Das Bindemittel umfasst insbesondere ein Harzsystem, z. B. umfassend einen Silikatteil und einen Isocyanat- oder Isocyanat-/Prepolymerteil. Durch die Verwendung des pumpfähigen Harzes als Bindemittel kann die Ankerlast innerhalb von wenigen Minuten aufgenommen werden, und damit schnell die Situation gesichert werden. Zementgebundene Injektionssysteme benötigen gegebenenfalls bis zu 24 Stunden für ein entsprechendes Aushärten. Insbesondere kann ein sofort verdickendes (thixotropes), schnell aushärtendes Zweikomponenten-Silikatharz (2K) eingesetzt werden. Nach dem Mischen der beiden Komponenten beispielsweise über einen statischen Mischer erreicht das Harz schnell bzw. sofort eine Viskosität, die unter konstantem Pumpendruck fließt. Das Harz härtet schnell aus und bildet eine harte Verbundmasse.

Es sind insbesondere auch hohle Anker bekannt, durch die das Bindemittel dem Bohrloch zugeführt werden kann. Ein solcher hohler Anker kann einen zentralen Zuführkanal umfassen, der den Anker bevorzugt vollständig durchdringt (entlang seiner Erstreckungsachse).

Der Anker kann insbesondere (zusätzlich) als Bohrer eingerichtet sein bzw. eingesetzt werden, so dass der Anker das Bohrloch selbst erzeugt und dann durch das anschließende Einbringen von Bindemittel in dem Bohrloch fixiert wird.

Ein Anker umfasst regelmäßig einen Schaft, der zumindest teilweise ein Gewinde aufweist. Insbesondere weist der Anker an einem ersten Ende eine Bohrkrone bzw. einen Schneidkörper zum Bohren des Bohrlochs auf. Der Anker kann auch einen mit glatter Oberfläche ausgeführten Abschnitt des Schafts aufweisen, so dass sich der Anker unabhängig von dem ihn umgebenden Bindemittel bzw. Felsmaterial in der Länge verändern kann. An einem zweiten Ende, das nach Anordnen des Ankers in dem Bohrloch insbesondere aus dem Bohrloch herausragt, kann insbesondere eine Ankerplatte angeordnet sein. Die Ankerplatte deckt insbesondere das Bohrloch ab und stützt sich somit an dem das Bohrloch umgebenden Material ab. Das Bohrloch wird regelmäßig bis zur Ankerplatte mit dem Bindemittel gefüllt.

Eine Vorrichtung umfasst z. B. eine Haltevorrichtung zum Halten des Ankers (die ggf. auch zum Bohren geeignet ausgeführt ist) und eine Injektionsvorrichtung zum Einbringen des Bindemittels in das Bohrloch, ggf. über den hohlen Anker.

Aus der US 2015/ 0117962 A1 sind ein Harzsystem und ein (selbstbohrender) Felsanker bekannt. Der Anker wird ins Bohrloch verbracht und automatisiert mit einem Zweikomponentenkunstharz verfüllt, bis das Kunstharz aus dem Bohrloch quillt und um den Ankerkopf herum sichtbar wird. Dies ist das visuelle Zeichen für einen Geräteführer, die Kunstharzzufuhr zu beenden. Es läuft eine exotherme Aushärtungsreaktion des Kunstharzes ab, deren Dauer abzuwarten ist, bis das Kunstharz den Anker stabil umschließt.

Da sowohl der Zeitpunkt des Austrittes des Kunstharzes aus dem Bohrloch als auch die Aushärtungszeit in diesem Harzsystem der Erfahrung und der individuellen Wahrnehmung des Geräteführers obliegen, ist dieser Aspekt des Prozesses fehleranfällig.

Dem Geräteführer stehen insbesondere Informationen über die Injektionsvorrichtung, wie z. B. Durchflussmenge, Pumpendruck, Injektionszeit, etc. über einen Bildschirm zur Verfügung. Der Austritt des Bindemittels wird vom Geräteführer visuell überwacht. Die Bindemittelinjektion wird gestoppt, wenn der Geräteführer visuell ein Austreten von Bindemittel an der Ankerplatte erkennt. Der Geräteführer befindet sich dabei in der Fahrkabine mehrere Meter von dem Bohrloch entfernt. Die Distanz und rauen Umgebungsbedingungen erschweren dabei die Sicht auf das Bohrloch bzw. den Anker.

Bei einer automatischen Bindemittelinjektion kann nur eine festgelegte Menge an Bindemittel in das Bohrloch injiziert werden. Es findet keine Anpassung an den Einzelfall statt. Dadurch kann auch zu viel Bindemittel eingebracht werden, was den Verbrauch des teuren Bindemittels erhöht. Andererseits kann es aufgrund evtl. Risse oder Klüfte dazukommen, dass in dem Bohrloch der Ringraum um den Anker nicht vollständig gefüllt wird und demzufolge zu wenig Bindemittel eingebracht wird.

Die Halte- bzw. Aushärtezeit ist ein Erfahrungswert. Wenn der Anker zu früh losgelassen wird, kann sich dieser verschieben und verändert damit seine Ankerwirkung.

Das Setzen von derartigen Ankern findet häufig Untertage und/oder in ungesicherten Bereichen statt. Es handelt sich hierbei um einen Gefahrenbereich, in dem sich Personal möglichst kurz oder gar nicht aufhalten sollte.

Die KR 102 020 054 B1 beschreibt eine Verstärkungsstruktur für Solar Photovoltaik Anlagen. Insbesondere weist die Anlage eine Staubmesseinrichtung auf mit Infrarotsende- und -messeinrichtungen, um zu prüfen, wie viel Staub sich in der Anlage befindet bzw. daraus entfernt wurde.

Aufgabe der vorliegenden Erfindung ist es, die mit Bezug auf den Stand der Technik angeführten Probleme zumindest teilweise zu lösen. Insbesondere soll eine Vorrichtung bzw. ein Verfahren zur Anordnung und Fixierung eines Ankers in einem Bohrloch vorgeschlagen werden, durch die bzw. das ein ordnungsgemäßes Anordnen des Ankers in dem Bohrloch erfolgen kann. Dabei soll gerade vermieden werden, dass zu wenig oder zu viel Bindemittel zugeführt wird. Weiter soll insbesondere vermieden werden, dass die Haltezeit bzw. Aushärtezeit falsch bemessen wird.

Zur Lösung dieser Aufgaben trägt eine Vorrichtung mit den Merkmalen gemäß Patentanspruch 1 sowie ein Verfahren mit den Merkmalen gemäß Patentanspruch 2 bei. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und/oder Details aus den Figuren ergänzt werden, wobei weitere Ausführungsvarianten der Erfindung aufgezeigt werden.

Es wird eine Vorrichtung zur Anordnung und Fixierung eines Ankers in einem Bohrloch vorgeschlagen. Die Vorrichtung umfasst zumindest eine Injektionsvorrichtung zur Einbringung eines, im Rahmen einer exothermen Reaktion aushärtenden, Bindemittels in das Bohrloch sowie eine berührungslos arbeitende Erfassungseinrichtung zur Erfassung von Infrarotstrahlung.

Ein wesentliches Element der hier vorgeschlagenen Erfindung liegt demnach in der Bindemitteldetektion beim Setzen bzw. Fixieren des Ankers.

Der Anker umfasst insbesondere einen Schaft, der zumindest teilweise ein Gewinde aufweist. Der Anker kann einen mit glatter Oberfläche ausgeführten Abschnitt des Schafts aufweisen, so dass sich der Anker unabhängig von dem ihn umgebenden Bindemittel bzw. Felsmaterial in der Länge verändern kann.

Insbesondere weist der Anker an einem ersten Ende eine Bohrkrone bzw. einen Schneidkörper zum Bohren des Bohrlochs auf, d. h. der Anker kann selbst zum Bohren des Bohrlochs verwendet werden und unmittelbar danach in dem Bohrloch verbleiben.

An einem zweiten, dem ersten gegenüberliegenden Ende, das nach Anordnen des Ankers in dem Bohrloch insbesondere aus dem Bohrloch herausragt, kann insbesondere eine Ankerplatte angeordnet sein. Die Ankerplatte deckt insbesondere das Bohrloch (vollständig) ab und wird an das Bohrloch bzw. das umgebende Material angedrückt. Das Bohrloch wird regelmäßig bis zur Ankerplatte mit dem Bindemittel gefüllt.

Der Anker kann als Gebirgsanker ausgeführt sein, insbesondere geeignet für den Berg- und/oder Tunnelbau. Der Anker kann als Seilanker ausgeführt sein.

Der Anker bzw. Schaft weist entsprechend große Dimensionen (entlang seine Erstreckung zwischen dem ersten Ende und dem zweiten Ende) auf, d. h. insbesondere einen Durchmesser von insbesondere mindestens 10 Millimetern und eine Länge von mindestens 0,5 Metern.

Die Vorrichtung umfasst zumindest eine Injektionsvorrichtung sowie eine berührungslos arbeitende Erfassungseinrichtung und kann gegebenenfalls um eine Haltevorrichtung ergänzt sein/werden.

Die Haltevorrichtung und die Injektionsvorrichtung können insbesondere als grundsätzlich bekannt angesehen werden. In diesem Zusammenhang wird z. B. auf die eingangs erwähnte US 2015/0117962 A1 verwiesen. Die dortigen Erläuterungen können zur weiteren Charakterisierung herangezogen werden.

Die Haltevorrichtung dient insbesondere dem Einführen des Ankers in das Bohrloch und/oder dem Halten des Ankers in einer gegenüber dem Bohrloch möglichst ausgerichteten und/oder ortsfesten Position. Ggf. kann die Haltevorrichtung auch zum Bohren geeignet ausgeführt sein, d. h. der Anker kann zum Bohren des Bohrlochs verwendet werden.

Die Injektionsvorrichtung dient insbesondere dem Zuführen bzw. Injizieren des Bindemittels in das Bohrloch, ggf. über einen hohl ausgeführten Anker. Das Bindemittel besteht insbesondere aus mehreren Komponenten, die insbesondere unmittelbar vor dem Zuführen in das Bohrloch miteinander vermischt werden. Das Vermischen der Komponenten kann aber auch im Bohrloch selbst erfolgen. Das Bereitstellen und/oder Vermischen des Bindemittels kann bevorzugt ebenfalls durch die Injektionsvorrichtung realisiert werden.

Das Bindemittel ist insbesondere so zusammengesetzt, dass es im Rahmen bzw. mit einer exothermen Reaktion aushärtet. Der Aushärteprozess findet somit (erst und/oder nur) im Bohrloch statt. Die dabei entstehende Wärme bzw. Veränderung der Wärmestrahlung, die überwacht wird, wird vorliegend insbesondere genutzt, um zu erkennen, ob das Bindemittel aus dem Bohrloch austritt bzw. ob das Bohrloch ausreichend gefüllt ist. Insbesondere entsteht bei der, bei Raumtemperatur und normalen Umgebungsdruck (ca. 1 bar) durchgeführten, exothermen Reaktion des Bindemittels eine erhöhte Temperatur.

Das Bindemittel kann insbesondere ein Zweikomponentensilikatharz sein und z. B. einen Silikatanteil und einen Isocyanat-/Prepolymeranteil aufweisen. Das Mischungsverhältnis beträgt insbesondere 1 zu 1. Ein erster Grenzwert z. B. für eine Spannweite, also dem Unterschied zwischen einem Minimum und einem Maximum der Intensitätswerte der Infrarotstrahlung in einem, von der Erfassungseinrichtung zu einem Zeitpunkt erfassten Bildausschnitt, beträgt insbesondere 20 %.

Weiter umfasst die Vorrichtung eine berührungslos arbeitende bzw. (bevorzugt) optische Erfassungseinrichtung, die insbesondere zur Erfassung einer Infrarotstrahlung, eingerichtet ist und/oder dient. Durch den Einsatz der Erfassungseinrichtung, z. B. einer Wärmebildkamera oder ein Infrarot-Thermometer, wird die von dem Bindemittel emittierte Wärme- bzw. Infrarotstrahlung, die bei der exothermen Reaktion der Bindemittelkomponenten entsteht, detektiert bzw. erfasst. Die bevorzugt optische Erfassungseinrichtung ist insbesondere zur Anordnung außerhalb des Bohrlochs vorgesehen bzw. eingerichtet.

Mit der Erfassungseinrichtung kann eine Vorrichtung realisiert werden, die das Befüllen des Bohrlochs objektiv beurteilt und dabei zeitgenau arbeitet, so dass unnötiger Materialeinsatz (z. B. hinsichtlich des Bindemittels) als auch Einbaufehler (z. B. hinsichtlich fehlerhafter Befüllung des Bohrlochs und/ oder unzureichender ortsfester Fixierung des Ankers durch die Haltevorrichtung) minimiert werden können.

Über die Ermittlung der Änderung der Intensitätswerte und/oder Intensitäts-Spannweite sowie das Setzen eines Grenzwertes für die erfasste Strahlung, kann insbesondere ein Rückschluss darauf gezogen werden, ob Bindemittel aus dem Bohrloch austritt.

Zu Beginn einer Bindemittelinjektion ist ein maximaler Intensitätswert (nahezu bzw. annähernd) konstant, beim Sichtbarwerden von Bindemittel steigt dieser messbar bzw. signifikant / stark an. Nach einigen Sekunden bis Minuten, insbesondere zwischen 15 Sekunden und drei Minuten, stellt sich dann ein höherer, nahezu bzw. annähernd konstanter maximaler Intensitätswert ein. Wenn kein Bindemittelaustritt festgestellt werden kann, findet auch keine signifikante Erhöhung des maximalen Intensitätswertes statt. Mit der Erfassungseinrichtung kann insbesondere ein Bindemittelaustritt sensiert werden. Diese Information kann zur Bewertung des Ablaufs der exothermen Reaktion (für eine Datenverarbeitung) weitergegeben bzw. angezeigt werden. Die Angabe einer Haltezeit, die basierend auf der Erfassung der emittierten (Infrarot-) Strahlung ebenfalls ermittelt werden kann, hilft dem Geräteführer, dass dieser den Anker nicht zu kurz und nicht zu lange festhält. Damit kann diese Information (unmittelbar) auch zum automatischen Betrieb der Vorrichtung genutzt werden.

Die angegebene Vorrichtung ermöglicht insbesondere eine Fernüberwachung des Bindemittelaustritts und der Bindemittelreaktion aus einer Entfernung zum Bohrloch heraus, z. B. aus einem Kontrollraum. Damit muss sich der Geräteführer nicht mehr unmittelbar im Gefahrenbereich befinden. Es kann so eine automatische Bindemittelinjektion mit einer auf die Gegebenheiten anpassbaren Menge an injiziertem Bindemittel erfolgen, vorausgesetzt, ein Bindemittelaustritt wird sichtbar bzw. durch die Erfassungseinrichtung sensierbar.

Zusätzlich kann eine individuelle Haltezeit für den jeweiligen Anker vorgegeben werden bzw. diese automatisch beendet werden, wenn die vorgegebenen Grenzwerte bzw. Parameter erreicht sind.

Es ist möglich, dass die Vorrichtung eine Auswerteeinheit aufweist, in der die Daten bzw. Signale der Erfassungseinrichtung weiterverarbeitet werden. Die weiterverarbeiten bzw. geprüften Daten bzw. Signale können einer separaten bzw. übergeordneten Steuereinrichtung übergeben werden. Die Auswerteeinheit kann von der Steuereinrichtung umfasst sein, das ist jedoch nicht zwingend erforderlich. Die Steuereinrichtung kann auch als (reine) Auswerteeinheit ausgeführt sein.

Die Vorrichtung weist eine Steuereinrichtung auf, mit der zumindest die Injektionsvorrichtung in Abhängigkeit von der durch die Erfassungseinrichtung erfassten Infrarotstrahlung steuerbar ist.

Die Steuereinrichtung ist insbesondere zur Steuerung der Injektionsvorrichtung, also z. B. zur Einstellung einer Durchfluss- oder Einbringungsmenge des Bindemittels hin zum Bohrloch und/ oder zum Starten bzw. Beenden des Förderns, geeignet ausgestattet, konfiguriert und/oder programmiert.

Insbesondere kann über die Steuereinrichtung auch die Haltevorrichtung kontrolliert betrieben bzw. gesteuert werden, also z. B. zum Bohren des Bohrlochs, zum Einführen und/oder Halten des Ankers und ggf. zum Freigeben des Ankers.

Es wird weiter ein Verfahren zur Anordnung und Fixierung eines Ankers in einem Bohrloch vorgeschlagen. Das Verfahren umfasst zumindest die folgenden Schritte:
a) Anordnen des Ankers in dem Bohrloch, insbesondere mit einer Haltevorrichtung;
b) Einbringen eines, mit einer exothermen Reaktion aushärtenden Bindemittels in das Bohrloch mit einer Injektionsvorrichtung;
c) Erfassung von Infrarotstrahlung mit einer berührungslos arbeitenden Erfassungseinrichtung;
   wobei die Injektionsvorrichtung in Abhängigkeit von der durch die Erfassungseinrichtung erfassten Infrarotstrahlung gesteuert wird.

Das Verfahren kann mit der hier beschriebenen Vorrichtung, umfassend zumindest die Haltevorrichtung, die Injektionsvorrichtung und die Erfassungseinrichtung, durchgeführt werden. Die beschriebene Vorrichtung kann insbesondere zur Durchführung eines solchen Verfahrens eingerichtet sein.

Die obige (nicht abschließende) Einteilung der Verfahrensschritte in a) bis c) soll vorrangig nur zur Unterscheidung dienen und keine Reihenfolge und/oder Abhängigkeit erzwingen. Auch die Häufigkeit der Verfahrensschritte z. B. während der Einrichtung und/oder des Betriebes der Vorrichtung kann variieren. Ebenso ist möglich, dass Verfahrensschritte einander zumindest teilweise zeitlich überlagern. Ganz besonders bevorzugt finden die Verfahrensschritte a) bis c) zumindest teilweise gleichzeitig, also einander zeitlich überlagernd, statt. Insbesondere finden die Schritte b) und c) nach Schritt a) statt. Insbesondere finden die Schritte b) und c) zumindest teilweise gleichzeitig statt. Insbesondere findet Schritt c) auch nach Schritt b) noch statt. Insbesondere werden die Schritte a) bis c) in der angeführten Reihenfolge durchgeführt.

Insbesondere erfolgt Schritt a), also insbesondere das Halten des Ankers durch die Haltevorrichtung, zumindest während Schritt b) und ggf. auch während Schritt c).

Insbesondere endet Schritt a), also das Halten des Ankers, erst dann, wenn im Rahmen des Schrittes c) ein vorbestimmtes Ergebnis (in Abhängigkeit der erfassten Infrarotstrahlung) festgestellt wird.

Insbesondere endet Schritt b), also das Einbringen des Bindemittels, erst dann, wenn im Rahmen des Schrittes c) ein vorbestimmtes Ergebnis (in Abhängigkeit der erfassten Infrarotstrahlung) festgestellt wird.

Insbesondere werden zumindest die Schritte b) und c) mit einer Steuereinrichtung durchgeführt, wobei die Steuereinrichtung das Einbringen des Bindemittels in Abhängigkeit von der erfassten Infrarotstrahlung beendet.

Die Steuereinrichtung ist insbesondere zur Steuerung der Injektionsvorrichtung, also z. B. zur Einstellung einer Durchfluss- oder Einbringungsmenge des Bindemittels hin zum Bohrloch und/oder zum Starten bzw. Beenden des Förderns, geeignet ausgestattet, konfiguriert oder programmiert.

Insbesondere wird vor Schritt b) oder (ggf. unmittelbar) zu Beginn von Schritt b) die Infrarotstrahlung am Bohrloch durch die Erfassungseinrichtung ermittelt und diese ermittelte Infrarotstrahlung durch die Steuereinrichtung als Referenzwert für die Steuerung der Injektionsvorrichtung verwendet.

Beispielsweise kann mittels der Erfassungseinrichtung am Bohrloch (berührungslos) eine IR- oder Wärmestrahlung bzw. ein Wärmebild des Bohrlochs und/ oder der Umgebung des Bohrlochs erfasst werden. Ist die Temperatur (oder ein vergleichbarer, davon abhängiger Parameter) des Bohrlochs bzw. der Umgebung besonders niedrig, ist der Referenzwert z. B. anders, als wenn am Bohrloch bzw. der Umgebung des Bohrlochs eine besonders hohe Temperatur festgestellt wird.

Insbesondere wird anhand der ermittelten Infrarotstrahlung (bzw. des Referenzwerts) durch die Steuereinrichtung ein erster Grenzwert definiert. Insbesondere beendet, wenn bei der Erfassung der Infrarotstrahlung ein Erreichen des ersten Grenzwerts festgestellt wird, die Steuereinrichtung das Einbringen des Bindemittels.

Ist die Temperatur des Bohrlochs bzw. der Umgebung vor Schritt b) also z. B. besonders niedrig, ist der Referenzwert z. B. anders, als wenn am Bohrloch bzw. der Umgebung des Bohrlochs eine besonders hohe Temperatur festgestellt wird. Entsprechend ist dann, wenn die Temperatur des Bohrlochs bzw. der Umgebung vor Schritt b) also besonders niedrig ist, der erste Grenzwert ebenfalls geringer, da die Infrarotstrahlung hin zur Erfassungseinrichtung infolge der Wärmeableitung hin zur Umgebung des Bohrlochs geringer ausfällt.

Durch den Einsatz der Erfassungseinrichtung wird insbesondere die emittierte Infrarotstrahlung, welche bei der exothermen Reaktion des Bindemittels entsteht, erfasst. Über die Ermittlung der Änderung der Intensitätswerte und/oder Intensitäts-Spannweite sowie das Setzen z. B. des ersten Grenzwertes, kann ein Rückschluss darauf gezogen werden, ob Bindemittel aus dem Bohrloch austritt.

Während der Injektion des Bindemittels werden insbesondere Infrarotbilder mittels der Erfassungseinrichtung (z. B. einer Wärmebildkamera) erstellt. Innerhalb des Infrarotbildes/ eines Bildausschnitts werden die minimalen und maximalen Intensitätswerte erfasst und/ oder eine Intensitäts-Spannweite (also eine Differenz zwischen den maximalen und den minimalen Intensitätswerten) ermittelt.

Während der Injektion bzw. der Einbringung des Bindemittels werden insbesondere die momentanen Intensitätswerte und/ oder die Intensitäts-Spannweite mit einem Referenzwert verglichen. Der Referenzwert ist z. B. ein Median- oder (arithmetischer Durchschnitts-) Mittelwert, der insbesondere vor Schritt b) oder zu Beginn von Schritt b) aus den Intensitätswerten der Startbilder ermittelt wurde. Erhöhen sich während der Injektion die Intensitätswerte und/ oder die Intensitäts-Spannweite auf einen definierten ersten Grenzwert, ist Bindemittel ausgetreten und die Injektion kann gestoppt werden.

Insbesondere wird die Einbringung des Bindemittels erst dann gestoppt, wenn der erste Grenzwert im Rahmen mehrerer Messungen wiederholt erreicht bzw. überschritten wurde.

Bei dem ersten Grenzwert kann es sich z. B. um einen relativen/ absoluten Wert für den maximalen Intensitätswert und/ oder die Intensitäts-Spannweite handeln.

Über die zeitliche Änderungsrate der Intensitätswerte und/oder Intensitäts-Spannweite können weitere Informationen, wie z. B. die optimale Haltezeit für den Anker, ermittelt werden.

Zu Beginn einer Bindemittelinjektion ist ein maximaler Intensitätswert der Infrarotstrahlung z. B. nahezu bzw. annähernd konstant, beim Sichtbarwerden von Bindemittel bzw. beim Austreten von Bindemittel aus dem Bohrloch steigt dieser Intensitätswert stark an. Nach einigen Sekunden stellt sich, insbesondere für kurze Zeit, insbesondere ein höherer nahezu bzw. annähernd konstanter maximaler Intensitätswert ein. Wenn kein Bindemittelaustritt festgestellt werden kann, findet auch keine signifikante Erhöhung des maximalen Intensitätswertes statt.

Insbesondere kann über die Erfassungseinrichtung ein Bindemittelaustritt aus dem Bohrloch erfasst werden. Weiter kann über die Erfassungseinrichtung eine Information über den Ablauf der exothermen Reaktion erfasst werden. Daraus kann z. B. eine Haltezeit abgeleitet werden, wobei die Angabe einer Haltezeit den Geräteführer hilft, dass dieser den Anker nicht zu kurz und nicht zu lang festhält.

Insbesondere wird zusätzlich Schritt a) mit der Steuereinrichtung durchgeführt, wobei die Steuereinrichtung die Haltevorrichtung zumindest in Bezug auf eine Dauer eines Haltens des Ankers in Abhängigkeit von der erfassten Infrarotstrahlung steuert. Insbesondere kann über die Erfassungseinrichtung festgestellt werden, ob nach Erreichen eines ersten Grenzwerts die exotherme Reaktion des Bindemittels wieder abnimmt bzw. ausläuft. Insbesondere kann dafür ein zweiter Grenzwert bestimmt werden, z. B. auf Basis des Referenzwerts und/ oder des ersten Grenzwerts oder auf Basis alternativer oder weiterer Parameter. Z. B. kann eine Steigung eines Verlaufs der Spannweite (oder anderer erfasster Parameter) über der Zeit (also über mehrere Zeitpunkte hinweg) erfasst und ausgewertet werden. Die ermittelte Steigung kann z. B. dabei helfen, eine optimale Haltezeit für den Anker zu ermitteln. Je nach ausgewähltem Bindemittel können die Fließ- und Aushärtezeiten variieren. Insbesondere bei längeren Aushärtezeiten kann die Angabe einer variablen Haltezeit dabei helfen, den Anker ausreichend lang festzuhalten, so dass dieser nicht relativ zum Bohrloch verrutscht.

Mit Erreichen oder Unterschreiten des zweiten Grenzwerts kann z. B. der Anker von der Haltevorrichtung wieder frei gegeben werden.

Insbesondere erfasst die Erfassungseinrichtung die Infrarotstrahlung in einem Bereich, umfassend das Bohrloch und eine Umgebung des Bohrlochs. Insbesondere werden durch die Steuereinrichtung Minimalwerte und Maximalwerte der in dem Bereich erfassten Infrarotstrahlung ermittelt und zumindest einer der folgenden Parameter daraus abgeleitet und in der Steuereinrichtung hinterlegt:
- Spannweite zwischen Minimalwert und Maximalwert an jeweils einem Zeitpunkt;
- Mittelwert oder Median der Spannweite, ermittelt aus den Spannweiten mehrerer Zeitpunkte;
- Mittelwert oder Median des Maximalwerts, ermittelt aus den Maximalwerten mehrerer Zeitpunkte;
- Verlauf der Spannweite über mehrere Zeitpunkte (bzw. den gesamten Zeitraum) hinweg;
- Verlauf der Maximalwerte über mehrere Zeitpunkte hinweg;
- Steigung des Verlaufs der Spannweite, des Maximalwerts, oder des Mittelwerts oder des Medians der Spannweite, an einem Zeitpunkt oder jeweils über mehrere Zeitpunkte.

Die Infrarotstrahlung kann (ggf. wahlweise) kontinuierlich als Wärmefilm und/oder zu diskreten Zeitpunkten als Wärmebilder erfasst werden.

Die Spannweite ist z. B. der Betrag der Differenz zwischen dem Minimalwert und dem Maximalwert der Intensität der Infrarotstrahlung und/ oder einer daraus abgeleiteten Temperatur, insbesondere zu einem Zeitpunkt.

Der Mittelwert ist insbesondere der arithmetische Mittelwert der Spannweite der zu bestimmten (gleichen) Zeitpunkten gemessenen Minimalwerte und Maximalwerte.

Der Median ist insbesondere der, unter Berücksichtigung der zu bestimmten Zeitpunkten erfassten Flächenanteile der jeweiligen Intensität, ermittelte Durchschnittswert der Spannweite.

Der Verlauf beschreibt insbesondere die Veränderung des Werts der Spannweite, des Mittelwerts bzw. des Medians über der Zeit.

Die Steigung beschreibt die Steigung des Verlaufs des jeweiligen Parameters (Spannweite, Maximalwert, Mittelwert, Median) über mehrere Zeitpunkte bzw. der Zeit.

Somit wird hier insbesondere eine berührungslose (optische) Methode zur Überwachung des Bindemittelaustritts während der Ankerinstallation mit folgenden technischen Merkmalen vorgeschlagen:
(1) Ein halbautomatisches Ankerbohrgerät, mit dem Hohlanker mit einem Bindemittel (insbesondere einem Zweikomponentenkunstharz) mit dem umgebenden Gebirge verbunden werden, ist mit einem Sensorsystem ausgerüstet.
(2) Das Sensorsystem umfasst eine thermische Kamera und eine Auswertungseinheit.
(3) Das Sensorsystem ist mit dem Ankerbohrgerät gekoppelt und übermittelt einer Steuereinrichtung oder dem Geräteführer Informationen über das Auslaufen überschüssigen Bindemittels aus dem Bohrloch, so dass eine geeignete oder sogar optimale Haltezeit für den Anker eingehalten wird, basierend auf der Interpretation der aufgenommenen thermografischen Daten.
(4) Das Auslaufen von überschüssigem Bindemittel aus dem Bohrloch wird erfasst, so dass die Injektion des Bindemittels automatisch beendet wird bzw. werden kann.
(5) Das Einbringen des Bindemittels wird in Abhängigkeit von der erfassten Infrarotstrahlung durchgeführt und/ oder beendet.

Insbesondere ist zumindest ein System zur Datenverarbeitung vorgesehen, das Mittel aufweist, die zur Durchführung des Verfahrens geeignet ausgestattet, konfiguriert oder programmiert sind bzw. die das Verfahren ausführen.

Insbesondere umfasst die beschriebene Vorrichtung ein System zur Datenverarbeitung, z. B. die Steuereinrichtung, die Mittel zur Ausführung der Schritte des Verfahrens aufweist und/ oder das Mittel aufweist, die zur Ausführung der Schritte des Verfahrens geeignet ausgestattet, konfiguriert oder programmiert sind bzw. die das Verfahren ausführen.

Die Mittel umfassen z. B. einen Prozessor und einen Speicher, in dem durch den Prozessor auszuführende Befehle gespeichert sind, sowie Datenleitungen oder Übertragungseinrichtungen, die eine Übertragung von Befehlen, Messwerten, Daten oder ähnlichem zwischen den angeführten Elementen, also z. B. der Haltevorrichtung, der Injektionsvorrichtung, der Erfassungseinrichtung, der Steuereinrichtung, ermöglichen.

Es wird weiter ein Computerprogramm vorgeschlagen, umfassend Befehle, die bei der Ausführung des Programms durch einen Computer diesen veranlassen, das beschriebene Verfahren bzw. die Schritte des beschriebenen Verfahrens auszuführen.

Es wird weiter ein computerlesbares Speichermedium vorgeschlagen, umfassend Befehle, die bei der Ausführung durch einen Computer diesen veranlassen, das beschriebene Verfahren bzw. die Schritte des beschriebenen Verfahrens auszuführen.

Die Ausführungen zu dem Verfahren sind insbesondere auf die Vorrichtung, das System zur Datenverarbeitung und/oder das computerimplementierte Verfahren (also das Computerprogramm und das computerlesbare Speichermedium) übertragbar und umgekehrt.

Die Verwendung unbestimmter Artikel ("ein", "eine", "einer" und "eines"), insbesondere in den Patentansprüchen und der diese wiedergebenden Beschreibung, ist als solche und nicht als Zahlwort zu verstehen. Entsprechend damit eingeführte Begriffe bzw. Komponenten sind somit so zu verstehen, dass diese mindestens einmal vorhanden sind und insbesondere aber auch mehrfach vorhanden sein können.

Vorsorglich sei angemerkt, dass die hier verwendeten Zahlwörter ("erste", "zweite", ...) vorrangig (nur) zur Unterscheidung von mehreren gleichartigen Gegenständen, Größen oder Prozessen dienen, also insbesondere keine Abhängigkeit und/oder Reihenfolge dieser Gegenstände, Größen oder Prozesse zueinander zwingend vorgeben. Sollte eine Abhängigkeit und/oder Reihenfolge erforderlich sein, ist dies hier explizit angegeben oder es ergibt sich offensichtlich für den Fachmann beim Studium der konkret beschriebenen Ausgestaltung. Soweit ein Bauteil mehrfach vorkommen kann ("mindestens ein"), kann die Beschreibung zu einem dieser Bauteile für alle oder ein Teil der Mehrzahl dieser Bauteile gleichermaßen gelten, dies ist aber nicht zwingend.

Die Erfindung sowie das technische Umfeld werden nachfolgend anhand der beiliegenden Figuren näher erläutert. Es ist darauf hinzuweisen, dass die Erfindung durch das angeführte Ausführungsbeispiel nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung zu kombinieren. Insbesondere ist darauf hinzuweisen, dass die Figuren und insbesondere die dargestellten Größenverhältnisse nur schematisch sind. Es zeigen:
- Fig. 1:: ein Bohrloch und eine Vorrichtung zur Anordnung und Fixierung eines Ankers;
- Fig. 2:: ein erstes Diagramm und mehrere Infrarotbilder; und
- Fig. 3:: ein zweites Diagramm.

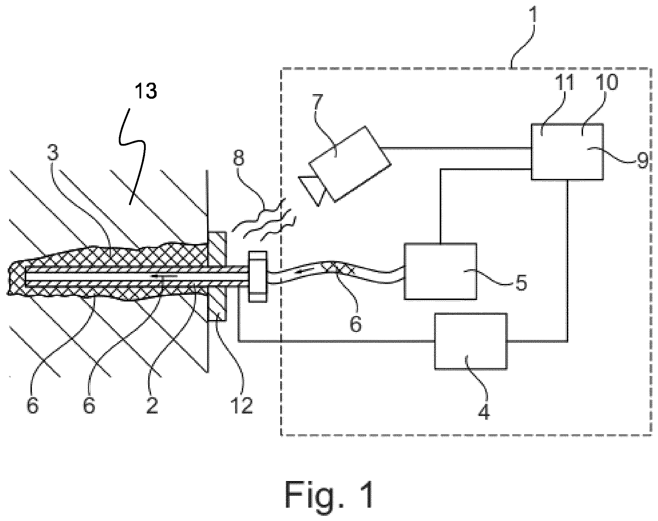

Fig. 1 zeigt ein Bohrloch 3 und eine Vorrichtung 1 zur Anordnung und Fixierung eines Ankers 2. Die Vorrichtung 1 umfasst eine Haltevorrichtung 4 zur Anordnung des Ankers 2 in dem Bohrloch 3, eine Injektionsvorrichtung 5 zur Einbringung eines, im Rahmen einer exothermen Reaktion aushärtenden, Bindemittels 6 in das Bohrloch 3 sowie eine berührungslos arbeitende Erfassungseinrichtung 7 zur Erfassung von Infrarotstrahlung 8.

Der Anker 2 umfasst einen Schaft, der zumindest teilweise ein Gewinde aufweist. Der Anker 2 weist auch einen mit glatter Oberfläche ausgeführten Abschnitt des Schafts auf, so dass sich der Anker 2 unabhängig von dem ihn umgebenden Bindemittel 6 bzw. das Bohrloch 3 umgebenden Felsmaterial 13 in der Länge verändern kann.

An dem zweiten Ende, das nach Anordnen des Ankers 2 in dem Bohrloch 3 aus dem Bohrloch 3 herausragt, ist eine Ankerplatte 12 angeordnet. Die Ankerplatte 12 deckt das Bohrloch 3 vollständig ab und stützt sich somit an dem das Bohrloch 3 umgebenden Felsmaterial 13 ab. Das Bohrloch 3 wird bis zur Ankerplatte 12 mit dem Bindemittel 6 gefüllt.

Die Haltevorrichtung 4 und die Injektionsvorrichtung 5 können als grundsätzlich bekannt angesehen werden. In diesem Zusammenhang wird z. B. auf die eingangs erwähnte US 2015/ 0117962 A1 verwiesen.

Die Haltevorrichtung 4 dient dem Einführen des Ankers 2 in das Bohrloch 3 und dem Halten des Ankers 2 in einer gegenüber dem Bohrloch 3 möglichst ortsfesten Position. Ggf. kann die Haltevorrichtung 4 auch zum Bohren geeignet ausgeführt sein, d. h. der Anker 2 kann zum Bohren des Bohrlochs 3 verwendet werden.

Die Injektionsvorrichtung 5 dient dem Zuführen bzw. Injizieren des Bindemittels 6 in das Bohrloch 3, vorliegend über den hohl ausgeführten Anker 2. Das Bindemittel 6 besteht aus mehreren Komponenten, die unmittelbar vor dem Zuführen in das Bohrloch 3 miteinander vermischt werden (nicht dargestellt). Das Bereitstellen und/oder Vermischen des Bindemittels 6 kann ebenfalls durch die Injektionsvorrichtung 5 realisiert werden.

Das Bindemittel 6 härtet im Rahmen einer exothermen Reaktion aus. Die dabei entstehende Wärme wird vorliegend genutzt, um zu erkennen, ob Bindemittel 6 aus dem Bohrloch 3 austritt bzw. ob das Bohrloch 3 ausreichend gefüllt ist.

Dazu umfasst die Vorrichtung 1 die Erfassungseinrichtung 7, die zur Erfassung von Infrarotstrahlung 8 dient. Durch den Einsatz der Erfassungseinrichtung 7 (Wärmebildkamera), wird die von dem Bindemittel 6 emittierte Infrarotstrahlung 8, die bei der exothermen Reaktion der Bindemittelkomponenten entsteht, erfasst.

Über die Ermittlung der Änderung der Intensitätswerte und/oder Intensitäts-Spannweite sowie das Setzen eines ersten Grenzwertes 10, kann ein Rückschluss darauf gezogen werden, ob Bindemittel 6 aus dem Bohrloch 3 austritt.

Zu Beginn einer Bindemittelinjektion ist ein maximaler Intensitätswert nahezu bzw. annähernd konstant, beim Sichtbarwerden von Bindemittel 6 (also, wenn das Bindemittel 6 aus dem Bohrloch 3 austritt) steigt dieser stark an. Nach einigen Sekunden stellt sich dann ein höherer nahezu bzw. annähernd konstanter maximaler Intensitätswert ein. Wenn kein Bindemittelaustritt festgestellt werden kann, findet auch keine signifikante Erhöhung des maximalen Intensitätswertes statt. Mit der Erfassungseinrichtung 7 kann ein Bindemittelaustritt sensiert werden und kann diese Information zum Ablauf der exothermen Reaktion weitergegeben bzw. angezeigt werden. Die Angabe einer Haltezeit, die basierend auf der Erfassung der emittierten Infrarotstrahlung 8 ebenfalls ermittelt werden kann, hilft dem Geräteführer, dass dieser den Anker 2 nicht zu kurz und nicht zu lange festhält.

Die angegebene Vorrichtung 1 ermöglicht eine Fernüberwachung des Bindemittelaustritts und der Bindemittelreaktion aus einer Entfernung zum Bohrloch 3 heraus, z. B. aus einem Kontrollraum. Damit muss sich der Geräteführer nicht mehr unmittelbar im Gefahrenbereich befinden. Es kann so eine automatische Bindemittelinjektion mit einer auf die Gegebenheiten anpassbaren Menge an injiziertem Bindemittel 6 erfolgen, vorausgesetzt, ein Bindemittelaustritt wird sichtbar bzw. ist durch die Erfassungseinrichtung 7 sensierbar.

Die Vorrichtung 1 umfasst zusätzlich eine Steuereinrichtung 9, mit der die Injektionsvorrichtung 5 in Abhängigkeit von der durch die Erfassungseinrichtung 7 erfassten Infrarotstrahlung 8 steuerbar ist.

Die Steuereinrichtung 9 ist zur Steuerung der Injektionsvorrichtung 5, also z. B. zur Einstellung einer Förderleistung des Bindemittels 6 hin zum Bohrloch 3 und/ oder zum Starten bzw. Beenden des Förderns, geeignet ausgestattet, konfiguriert oder programmiert.

Über die Steuereinrichtung 9 kann auch die Haltevorrichtung 4 gesteuert werden, also z. B. zum Bohren des Bohrlochs 3, zum Einführen und/ oder Halten des Ankers 2 und ggf. zum Freigeben des Ankers 2.

Schritt a) des beschriebenen Verfahrens umfasst das Anordnen des Ankers 2 in dem Bohrloch 3 mit der Haltevorrichtung 4. Schritt b) ist auf das Einbringen eines, im Rahmen einer exothermen Reaktion aushärtenden, Bindemittels 6 in das Bohrloch 3 mit der Injektionsvorrichtung 5 gerichtet. Schritt c) umfasst die Erfassung von Infrarotstrahlung 8 mit der Erfassungseinrichtung 7.

Das Verfahren wird mit einer Steuereinrichtung 9 durchgeführt, wobei die Steuereinrichtung 5 das Einbringen des Bindemittels 6 in Abhängigkeit von der erfassten Infrarotstrahlung 8 beendet.

Vor Schritt b) kann die Infrarotstrahlung 8 am Bohrloch 3 durch die Erfassungseinrichtung 7 ermittelt und diese ermittelte Infrarotstrahlung 8 durch die Steuereinrichtung 9 als Referenzwert 10 für die Steuerung der Injektionsvorrichtung 9 verwendet werden.

Z. B. kann am Bohrloch 3 eine Temperatur bzw. ein Wärmebild des Bohrlochs 3 und/oder der Umgebung des Bohrlochs 3 erfasst werden. Ist die Temperatur des Bohrlochs 3 bzw. der Umgebung besonders niedrig, ist der Referenzwert 10 z. B. anders, als wenn am Bohrloch 3 bzw. der Umgebung des Bohrlochs 3 eine besonders hohe Temperatur festgestellt wird.

Anhand der ermittelten Infrarotstrahlung 8 (bzw. des Referenzwerts 10) wird durch die Steuereinrichtung 9 ein erster Grenzwert 11 definiert. Die Steuereinrichtung 9 beendet, wenn bei der Erfassung der Infrarotstrahlung 8 ein Erreichen des ersten Grenzwerts 11 festgestellt wird, das Einbringen des Bindemittels 6 in das Bohrloch 3.

Durch den Einsatz der Erfassungseinrichtung 7 wird die emittierte Infrarotstrahlung 8, welche bei der exothermen Reaktion des Bindemittels 6 entsteht, erfasst. Über die Ermittlung der Änderung der Intensitätswerte und/oder Intensitäts-Spannweite sowie das Setzen z. B. des ersten Grenzwertes 11, kann ein Rückschluss darauf gezogen werden, ob Bindemittel 6 aus dem Bohrloch 3 austritt.

Während der Injektion des Bindemittels 6 werden Infrarotbilder mittels der Erfassungseinrichtung 7 (z. B. einer Wärmebildkamera) erstellt. Innerhalb des Infrarotbildes/ eines Bildausschnitts werden die minimalen und maximalen Intensitätswerte erfasst und/ oder eine Intensitäts-Spannweite (also eine Differenz zwischen den maximalen und den minimalen Intensitätswerten) ermittelt.

Über die Erfassungseinrichtung 7 kann ein Bindemittelaustritt aus dem Bohrloch 3 erfasst werden. Weiter kann über die Erfassungseinrichtung 7 eine Information über den Ablauf der exothermen Reaktion erfasst werden. Daraus kann z. B. eine Haltezeit abgeleitet werden, wobei die Angabe einer Haltezeit dem Geräteführer hilft, dass dieser den Anker 2 mit der Haltevorrichtung 4 nicht zu kurz und nicht zu lang festhält.

Zusätzlich wird Schritt a) mit der Steuereinrichtung 9 durchgeführt, wobei die Steuereinrichtung 9 die Haltevorrichtung 4 zumindest in Bezug auf eine Dauer eines Haltens des Ankers 2 in Abhängigkeit von der erfassten Infrarotstrahlung 8 steuert. Über die Erfassungseinrichtung 7 kann festgestellt werden, ob nach Erreichen eines ersten Grenzwerts 11 die exotherme Reaktion des Bindemittels 6 wieder abnimmt bzw. ausläuft. Dafür kann ein zweiter Grenzwert bestimmt werden, z. B. auf Basis des Referenzwerts 10 und/ oder des ersten Grenzwerts 11 oder auf Basis alternativer oder weiterer Parameter, z. B. der Steigung.

Mit Erreichen oder Unterschreiten des zweiten Grenzwerts kann z. B. der Anker 2 von der Haltevorrichtung 4 wieder frei gegeben werden.

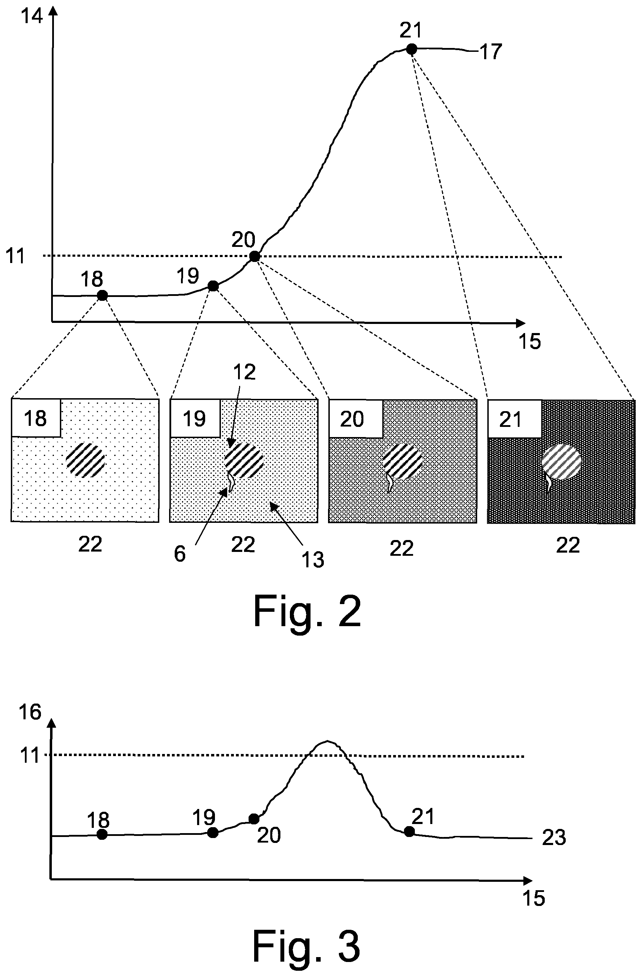

Fig. 2 zeigt ein erstes Diagramm und mehrere Infrarotbilder 22. Auf die Ausführungen zu Fig. 1 wird verwiesen.

An der horizontalen Achse ist die Zeit 15 aufgetragen. An der vertikalen Achse ist die Spannweite 14 aufgetragen. Der erste Verlauf 17 zeigt den Verlauf der Spannweite 14 über der Zeit 15. Die darunter angeführten Infrarotbilder 22 zeigen die Infrarotstrahlung 8 des Bohrlochs 3 bzw. der Ankerplatte 12 und des umgebenden Felsmaterials 13 sowie ab dem zweiten Zeitpunkt 19 das aus dem Bohrloch 3 austretende bzw. das unter der Ankerplatte 12 hervortretende Bindemittel 6.

Der erste Zeitpunkt 18 markiert den Beginn der Injektion des Bindemittels 6 in das Bohrloch 3. Der zweite Zeitpunkt 19 markiert das erste Sichtbarwerden des Bindemittels 6, das aus dem Bohrloch 3 austritt bzw. unter der Ankerplatte 12 hervortritt. Der dritte Zeitpunkt 20 markiert das Erreichen bzw. Überschreiten des definierten ersten Grenzwerts 11 der Spannweite 14. Zum vierten Zeitpunkt 21 erfolgt das Loslassen des Ankers 2 durch die Haltevorrichtung 4.

Fig. 3 zeigt ein zweites Diagramm. Auf die Ausführungen zu den Fig. 1 und 2 wird Bezug genommen.

An der horizontalen Achse ist die Zeit 15 aufgetragen. An der vertikalen Achse ist die Steigung 16 der Spannweite 14 nach Fig. 2 aufgetragen. Der zweite Verlauf 23 zeigt den Verlauf der Steigung 16 über der Zeit 15. Die Zeitpunkte 18, 19, 20, 21 sind entsprechend Fig. 2 markiert. Der erste Grenzwert 11 ist hier als Wert der Steigung 16 und damit anders als in Fig. 2 definiert.

## Patentansprüche

1. Vorrichtung (1) zur Anordnung und Fixierung eines Ankers (2) in einem Bohrloch (3), zumindest umfassend eine Injektionsvorrichtung (5) zur Einbringung eines, mit einer exothermen Reaktion aushärtenden Bindemittels (6) in das Bohrloch (3) sowie eine berührungslos arbeitende Erfassungseinrichtung (7) zur Erfassung von Infrarotstrahlung (8), **gekennzeichnet durch** eine Steuereinrichtung (9), mit der zumindest die Injektionsvorrichtung (5) in Abhängigkeit von der **durch** die Erfassungseinrichtung (7) erfassten Infrarotstrahlung (8) steuerbar ist.

2. Verfahren zur Anordnung und Fixierung eines Ankers (2) in einem Bohrloch (3), zumindest umfassend die folgenden Schritte:
a) Anordnen des Ankers (2) in dem Bohrloch (3);
b) Einbringen eines, im Rahmen einer exothermen Reaktion aushärtenden, Bindemittels (6) in das Bohrloch (3) mit einer Injektionsvorrichtung (5);
c) Erfassung von Infrarotstrahlung (8) mit einer berührungslos arbeitenden Erfassungseinrichtung (7);
**dadurch gekennzeichnet , dass** die Injektionsvorrichtung (5) in Abhängigkeit von der durch die Erfassungseinrichtung (7) erfassten Infrarotstrahlung (8) gesteuert wird.

3. Verfahren nach Patentanspruch 2, wobei zumindest die Schritte b) und c) mit einer Steuereinrichtung (9) durchgeführt werden, wobei die Steuereinrichtung (9) das Einbringen des Bindemittels (6) in Abhängigkeit von der erfassten Infrarotstrahlung (8) beendet.

4. Verfahren nach Patentanspruch 3, wobei vor Schritt b) oder zu Beginn von Schritt b) die Infrarotstrahlung (8) am Bohrloch (3) durch die Erfassungseinrichtung (7) ermittelt und diese ermittelte Infrarotstrahlung (8) durch die Steuereinrichtung (9) als Referenzwert (10) für die Steuerung der Injektionsvorrichtung (5) verwendet wird.

5. Verfahren nach Patentanspruch 4, wobei anhand der ermittelten Infrarotstrahlung (8) durch die Steuereinrichtung (9) ein erster Grenzwert (11) definiert wird; wobei, wenn bei der Erfassung der Infrarotstrahlung (8) ein Erreichen des ersten Grenzwerts (11) festgestellt wird, die Steuereinrichtung (9) das Einbringen des Bindemittels (6) beendet.

6. Verfahren nach einem der vorhergehenden Patentansprüche 3 bis 5, wobei zusätzlich Schritt a) mit der Steuereinrichtung (9) durchgeführt wird, wobei die Steuereinrichtung (9) die Haltevorrichtung (4) zumindest in Bezug auf eine Dauer eines Haltens des Ankers (2) in Abhängigkeit von der erfassten Infrarotstrahlung (8) steuert.

7. Verfahren nach einem der vorhergehenden Patentansprüche 3 bis 6, wobei die Erfassungseinrichtung (7) die Infrarotstrahlung (8) in einem Bereich, umfassend das Bohrloch (3) und eine Umgebung des Bohrlochs (3), erfasst; wobei durch die Steuereinrichtung (9) Minimalwerte und Maximalwerte der in dem Bereich erfassten Infrarotstrahlung (8) ermittelt werden und zumindest einer der folgenden Parameter daraus abgeleitet und in der Steuereinrichtung (9) hinterlegt wird:
• Spannweite (14) zwischen Minimalwert und Maximalwert an jeweils einem Zeitpunkt (18, 19, 20, 21);
• Mittelwert oder Median der Spannweite (14), ermittelt aus den Spannweiten (14) mehrerer Zeitpunkte (18, 19, 20, 21);
• Mittelwert oder Median des Maximalwerts, ermittelt aus den Maximalwerten mehrerer Zeitpunkte (18, 19, 20, 21);
• Verlauf der Spannweite (14) über mehrere Zeitpunkte (18, 19, 20, 21) hinweg;
• Verlauf der Maximalwerte über mehrere Zeitpunkte (18, 19, 20, 21) hinweg;
• Steigung (16) des Verlaufs der Spannweite (14), des Maximalwerts, des Mittelwerts oder des Medians der Spannweite (14), an einem Zeitpunkt oder jeweils über mehrere Zeitpunkte (18, 19, 20, 21).

## Claims

1. Apparatus (1) for arranging and fixing an anchor (2) in a drilled hole (3), at least comprising an injection device (5) for introducing a binder (6), which cures with an exothermic reaction, into the drilled hole (3), and a contactlessly operating detection device (7) for detecting infrared radiation (8),
**characterized by**
a control device (9), by means of which at least the injection device (5) is controllable as a function of the infrared radiation (8) detected by the detection device (7).

2. Method for arranging and fixing an anchor (2) in a drilled hole (3), at least comprising the following steps:
a. arranging the anchor (2) in the drilled hole (3);
b. introducing a binder (6), which cures within the scope of an exothermic reaction, into the drilled hole (3) by means of an injection device (5);
c. detecting infrared radiation (8) by means of a contactlessly operating detection device (7);
**characterized in that**
the injection device (5) is controlled as a function of the infrared radiation (8) detected by the detection device (7).

3. Method according to claim 2, wherein at least steps b) and c) are carried out by means of a control device (9), wherein the control device (9) terminates the introduction of the binder (6) as a function of the detected infrared radiation (8).

4. Method according to claim 3, wherein, before step b) or at the beginning of step b), the infrared radiation (8) at the drilled hole (3) is determined by the detection device (7), and this determined infrared radiation (8) is used by the control device (9) as a reference value (10) for controlling the injection device (5).

5. Method according to claim 4, wherein a first limit value (11) is defined by the control device (9) on the basis of the determined infrared radiation (8); wherein, when reaching of the first limit value (11) is established during detection of the infrared radiation (8), the control device (9) terminates the introduction of the binder (6).

6. Method according to one of preceding claims 3 to 5, wherein step a) is additionally carried out by means of the control device (9), wherein the control device (9) controls the holding device (4), at least with respect to a duration of holding of the anchor (2), as a function of the detected infrared radiation (8).

7. Method according to one of preceding claims 3 to 6, wherein the detection device (7) detects the infrared radiation (8) in a region comprising the drilled hole (3) and an environment of the drilled hole (3); wherein minimum values and maximum values of the infrared radiation (8) detected in the region are determined by the control device (9), and at least one of the following parameters is derived therefrom and stored in the control device (9):
• a span width (14) between minimum value and maximum value at a respective point in time (18, 19, 20, 21);
• a mean value or median of the span width (14), determined from the span widths (14) of several points in time (18, 19, 20, 21);
• a mean value or median of the maximum value, determined from the maximum values of several points in time (18, 19, 20, 21);
• a profile of the span width (14) over several points in time (18, 19, 20, 21);
• a profile of the maximum values over several points in time (18, 19, 20, 21);
• a slope (16) of the profile of the span width (14), of the maximum value, of the mean value or of the median of the span width (14), at one point in time or respectively over several points in time (18, 19, 20, 21).

## Revendications

1. Arrangement (1) destiné à mettre en place et à caler un élément d'ancrage (2) dans un trou de perçage (3), comprenant au moins un arrangement d'injection (5) destiné à introduire dans le trou de perçage (3) un liant durcissant par réaction exothermique (6), ainsi qu'un dispositif de détection (7) fonctionnant sans contact destiné à détecter le rayonnement infrarouge (8), **caractérisé par** un dispositif de commande (9), avec lequel peut être commandé au moins l'arrangement d'injection (5) en fonction du rayonnement infrarouge (8) détecté par le dispositif de détection (7).

2. Procédé de mise en place et de calage d'un élément d'ancrage (2) dans un trou de perçage (3), comprenant au moins en détail les étapes suivantes :
a) mise en place de l'élément d'ancrage (2) dans le trou de forage (3) ;
b) introduction, dans le trou de perçage (3) à l'aide d'un arrangement d'injection (5), d'un liant (6) qui durcit dans le cadre d'une réaction exothermique ;
c) détection du rayonnement infrarouge (8) avec un dispositif de détection (7) fonctionnant sans contact ;
**caractérisé en ce que** l'arrangement d'injection (5) est commandé en fonction du rayonnement infrarouge (8) détecté par le dispositif de détection (7).

3. Procédé selon la revendication 2, au moins les étapes b) et c) étant exécutées avec un dispositif de commande (9), le dispositif de commande (9) mettant fin à l'introduction du liant (6) en fonction du rayonnement infrarouge (8) détecté.

4. Procédé selon la revendication 3, le rayonnement infrarouge (8) étant déterminé au niveau du trou de perçage (3) par le dispositif de détection (7) avant l'étape b) ou au début de l'étape b), et ce rayonnement infrarouge (8) déterminé étant utilisé par le dispositif de commande (9) comme valeur de référence (10) pour la commande de l'arrangement d'injection (5).

5. Procédé selon la revendication 4, une première valeur limite (11) étant définie par le dispositif de commande (9) à l'aide du rayonnement infrarouge (8) déterminé ; lorsqu'il est constaté que la première valeur limite (11) est atteinte lors de la détection du rayonnement infrarouge (8), le dispositif de commande (9) mettant fin à l'introduction du liant (6).

6. Procédé selon l'une des revendications 3 à 5 précédentes, l'étape a) étant en plus exécutée par le dispositif de commande (9), le dispositif de commande (9) commandant le dispositif de maintien (4) en fonction du rayonnement infrarouge (8) détecté, au moins en référence à une durée de maintien de l'élément d'ancrage (2).

7. Procédé selon l'une des revendications 3 à 6 précédentes, le dispositif de détection (7) détectant le rayonnement infrarouge (8) dans une zone comprenant le trou de perçage (3) et un environnement du trou de perçage (3) ; des valeurs minimales et des valeurs maximales du rayonnement infrarouge (8) détecté dans la zone étant déterminées par le dispositif de commande (9) et au moins l'un des paramètres suivants en étant dérivé et enregistré dans le dispositif de commande (9) :
• portée (14) entre la valeur minimale et la valeur maximale respectivement à un moment (18, 19, 20, 21) donné ;
• valeur moyenne ou médiane de la portée (14), déterminée à partir des portées (14) de plusieurs moments (18, 19, 20, 21) ;
• valeur moyenne ou médiane de la valeur maximale, déterminée à partir des valeurs maximales de plusieurs moments (18, 19, 20, 21) ;
• évolution de la portée (14) sur plusieurs moments (18, 19, 20, 21) ;
• évolution des valeurs maximales sur plusieurs moments (18, 19, 20, 21) ;
• pente (16) de l'évolution de la portée (14), de la valeur maximale, de la valeur moyenne ou de la médiane de la portée (14), à un moment donné ou respectivement sur plusieurs moments (18, 19, 20, 21).
